# EUROPEAN PATENT SPECIFICATION

(11) **EP 4 015 753 B1**
(45) Date of publication and mention of the grant of the patent: **25.09.2024**
(21) Application number: 21213369.8
(22) Date of filing: 09.12.2021
(51) Int. Cl.: E05F 15/635, F16H 55/26

(54) **RACK FOR MOTORIZED GATES**
GESTELL FÜR MOTORISIERTE TORE
BÂTI POUR PORTES MOTORISÉES

(30) Priority: 18.12.2020 IT 202000031475
(43) Date of publication of application: 22.06.2022
(73) Proprietor: Stagnoli T.G. S.r.l., 25017 Lonato del Garda (Brescia) (IT)
(72) Inventor: ALBIERO, Davide, 25017 Lonato del Garda (Brescia) (IT); ALBIERO, Paolo, 25017 Lonato del Garda (Brescia) (IT)
(74) Representative: Chimini, Francesco

(56) References cited:
- KR-A- 20090 129 550
- US-A- 5 515 650

## Description

This invention relates to a rack for motorized sliding gates.

This invention also relates to an actuation system for moving sliding gates and to a gate assembly.

In particular, in motorized sliding gates, a rack is fixed to the base of the gate. The rack has a toothing which engages a pinion rotated by a driving apparatus in order to open and close the gate.

A variety of racks for sliding gates are known from the prior art.

Racks are known that are made of steel, which is a material that ensures the sturdiness and straightness of the rack. However, the steel product has a number of disadvantages, including the lack of electrical insulation, the need for lubrication, oxidation, and noise.

Racks are also known that are made of polymer material, for example nylon, which racks are molded onto a metal core, for example a steel bar. The use of the metal core is justified by the fact that it preserves the linearity of the molded product, especially when the rack is a certain length, for example greater than 50 cm. KR 2009 0129550 A discloses an example of a rack.

The object of this invention is to obtain a rack which is able to overcome the disadvantages of the racks of the prior art.

In particular, the object of this invention is to provide a rack which is made exclusively of polymer material but which does not comprise a metal core.

These objects are achieved by means of a rack according to claim 1, an actuation system according to claim 5, and a gate assembly according to claim 7. The claims dependent thereon describe preferred or advantageous embodiments of the invention.

The features and advantages of the subject matter of this invention will become apparent from the following detailed description of its preferred embodiments, given by way of non-limiting example, with reference to the accompanying figures, in which:

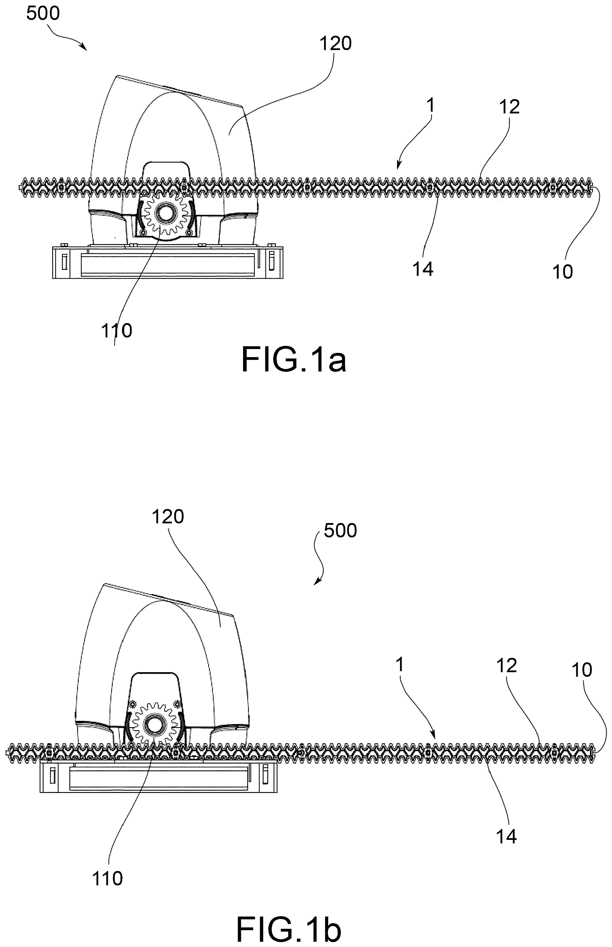

- Fig. 1a and 1b are two front views of an actuation system for moving sliding gates, which system is the subject of this invention, according to two embodiments;

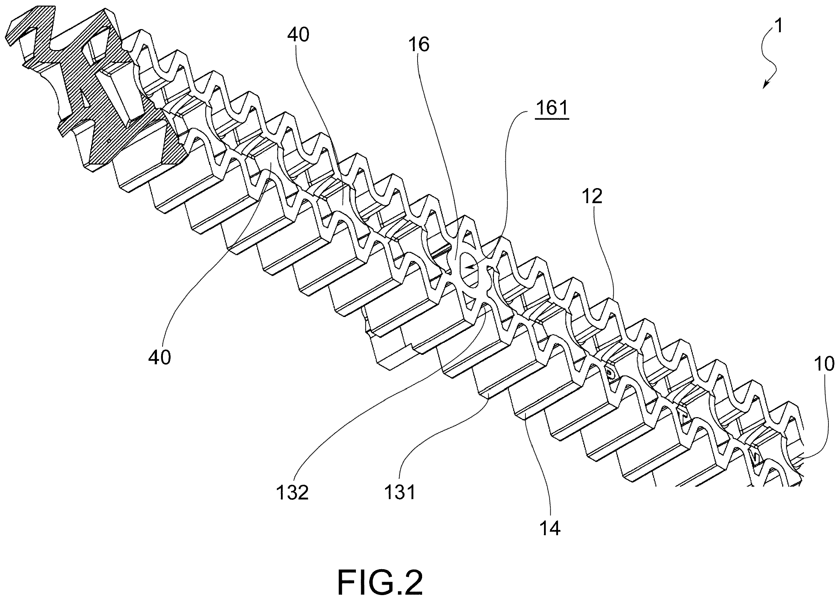

- Fig. 2 is a perspective view of part of a rack according to this invention, according to a preferred embodiment;

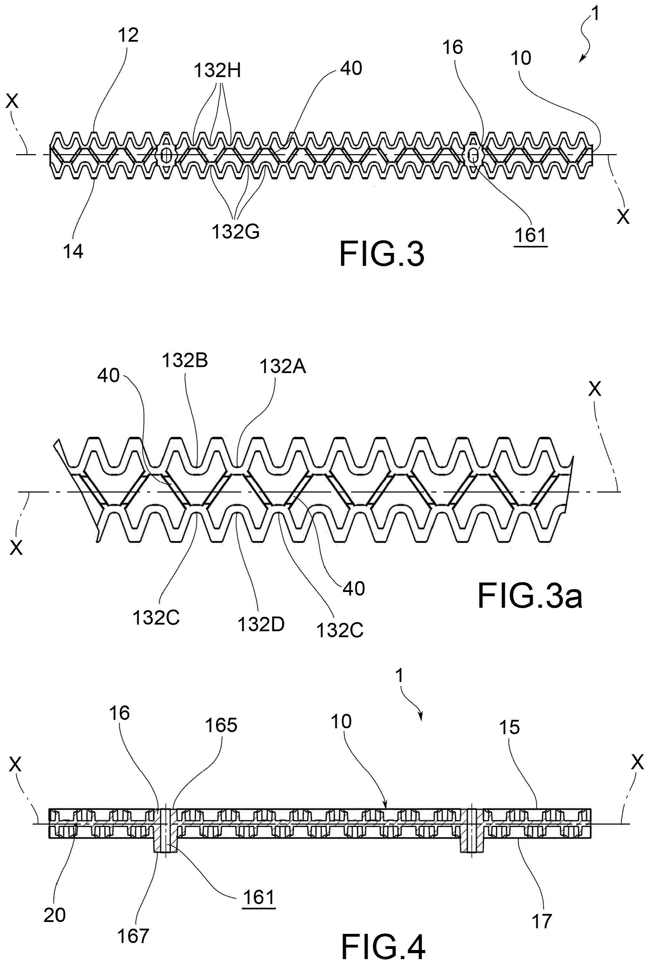

- Fig. 3 is a front view of part of a rack according to the invention, in a preferred embodiment;
- Fig. 3a represents an enlargement of Fig. 3;
- Fig. 4 is a plan view of part of a rack according to the invention, according to a preferred embodiment; and

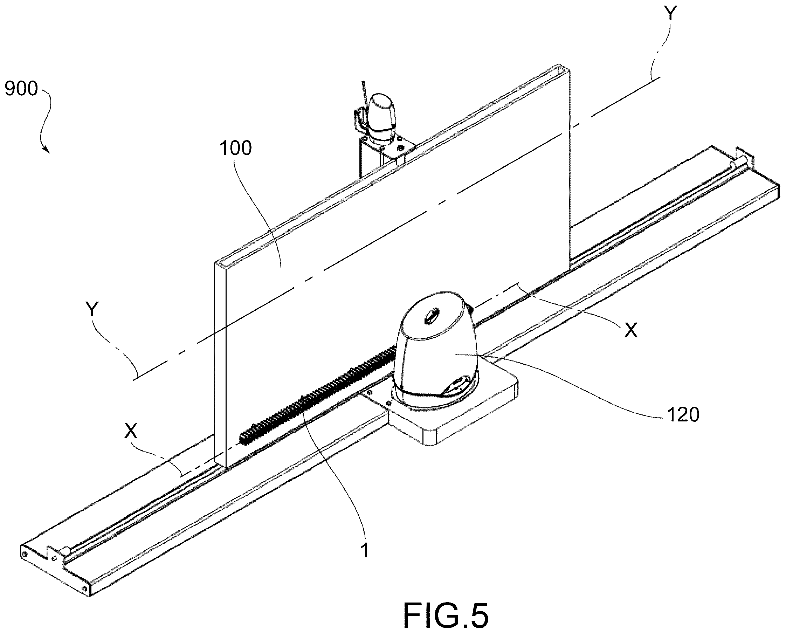

- Fig. 5 is a perspective view of a gate assembly which is the subject of this invention, according to a preferred embodiment.

In accordance with the accompanying figures, the reference sign 1 is used to indicate, as a whole, a rack according to the invention. The rack 1 is suitable to be used in an actuation system 500 for a gate 100.

This actuation system 500, comprising the rack 1, is also part of the subject matter of this invention.

In particular, the rack 1 is suitable to be fixed to the base of a gate 100 in order to allow the gate to automatically slide open and closed. The actuation system 500 and the gate 100 form a gate assembly 900.

This gate assembly 900, comprising the actuation system 500, is also part of the subject matter of this invention.

According to this invention, the rack 1 comprises a rack body 10 which mainly extends in a longitudinal direction along a rack axis X-X. This rack body 10 is made in one piece.

According to the invention, the rack body 10 is made of polymer material only.

For example, the rack body 10 is made of polyamide PA6 (commonly known as "nylon"). For example, this polyamide PA6 is reinforced with glass fiber. For example, this polyamide PA6 is reinforced with 30% glass fiber.

For example, the rack body 10 has a length of approximately 1 meter, for example 997 millimeters.

In the following description, the terms "lower", "upper", "front" and "rear" and terms equivalent thereto refer to the rack in a configuration in which it is fixed to the base of the gate 100, i.e. oriented horizontally and with its rear side facing the gate 100.

According to the invention, an upper toothing 12 and a lower toothing 14 are formed in the rack body 10, which toothings are suitable to engage a pinion 110 of a driving member 120 for moving the gate 100.

According to the invention, the upper toothing 12 and the lower toothing 14 are mutually equal and are symmetrical with respect to the rack axis X-X.

According to the invention, the rack body 10 forms a vertical wall 20.

This vertical wall 20 divides the rack body 10 into a front portion and a rear portion. In other words, each toothing 12, 14 extends, in the dimension thereof which is perpendicular to the rack axis X-X, i.e. in the direction of the breadth or width thereof, so as to straddle the vertical wall 20. In other words, the vertical wall 20 divides the rack body 10 into the front portion and the rear portion in the direction of the breadth or width of the rack.

In one embodiment, the rack body 10 is divided substantially symmetrically by this vertical wall 20. In other words, this vertical wall 20 divides the rack body 10 into a front portion and into a rear portion that are substantially mutually equal.

According to the invention, the rack body 10 is substantially hollow. Said front portion and said rear portion are therefore a front longitudinal cavity and a rear longitudinal cavity, respectively, which extend along the rack axis X-X.

According to one embodiment, each toothing 12, 14 comprises a plurality of teeth 131 separated by a plurality of depressions 132.

For example, the upper toothing 12 and the lower toothing 14 each have a number of teeth 131 equal to 79.

In one embodiment, the distance transverse to the rack axis X-X between two teeth 131 is equal to 32 millimeters.

According to the invention, embodiment, the rack body 10 forms reinforcing ribs 40.

According to one embodiment, each depression 132 of at least one set of depressions 132H of a toothing 12, 14 is connected to two respective depressions 132 of at least one set of depressions 132G of the other toothing by means of these reinforcing ribs 40. For example, a set of depressions comprises alternating depressions of a toothing, i.e. one depression every two depressions of a toothing.

In other embodiments, a set of depressions comprises one depression every four depressions of a toothing.

In one embodiment, these two depressions 132 are axially offset with respect to the depression 132 of the facing toothing to which they are connected. In particular, with respect to the rack axis X-X, a depression 132 from which two reinforcing ribs 40 extend is positioned at an intermediate distance between the two depressions 132 of the opposite toothing to which it is connected by the reinforcing ribs.

In one embodiment shown in the figures, one depression 132A in every two depressions 132A, 132B of a first toothing is connected by means of two reinforcing ribs 40 to the two depressions 132C adjacent to the depression 132D of the second toothing facing the depression 132A of the first toothing from which the reinforcing ribs 40 extend.

According to a preferred embodiment, the reinforcing ribs 40 form a grating which passes through each of the two longitudinal cavities, i.e. the front and rear cavities. In this grating, the reinforcing ribs 40 are alternatively parallel to one another and are symmetrical with respect to the rack axis X-X.

According to the invention, each reinforcing rib 40 is connected to the vertical wall 20.

According to one embodiment, a plurality of slotted fixing elements 16 interposed between the upper toothing 12 and the lower toothing 14 is formed in the rack body 10.

For example, the number of slotted fixing elements 16 is equal to 5.

In one embodiment, the distance along the rack axis X-X between two slotted fixing elements 16 is between 213 and 214 millimeters, for example equal to 213.62 millimeters.

In a preferred embodiment, the distance along the rack axis X-X between the end slotted element and the (closest) end of the rack is between 73 and 74 millimeters, for example equal to 73.42 millimeters.

According to one embodiment, a through slot 161 is formed in each of said slotted fixing elements 16, for a screw to pass through for fixing the rack 1 to the base of the gate 100. In other words, a fixing screw extends so as to engage a fixing slot 161. This means that the rack 1 and the gate 100 mechanically engage one another.

According to one embodiment, this slot 161 has a vertical extension.

In other embodiments, the rack according to the invention can be fixed to the base of the gate by means of other fixing systems, for example can be glued to the gate by means of a specific adhesive.

According to a preferred embodiment, the upper toothing 12 and the lower toothing 14 comprise front faces 15 and rear faces 17. In other words, each toothing 12, 14 extends between the front face 15 and the rear face 17.

In one embodiment, the distance between the front faces 15 and the rear faces 17 is equal to 20 millimeters.

According to one embodiment, the slotted fixing elements 16 protrude horizontally from a vertical rear plane defined by the rear faces 17 of the toothings 12, 14. This vertical rear plane is preferably parallel to the plane of extension of the gate 100 on which the rack 1 is to be mounted.

In a preferred embodiment, the slotted element comprises a front face slotted element 165 and a rear face slotted element 167.

According to a preferred embodiment, the front face slotted element 165 lies on a plane defined by the front faces 15 of the toothings 12, 14.

In a preferred embodiment, the rear face slotted element 167 positionable so as to tightly rest against the gate 100. In other words, the rack 1 is fixed to the gate 100 such that the front face slotted element 165 is in contact with the gate 100. In this way, the pinion 110 can engage the rack 1 while not entering into direct contact with the gate 100, thus preventing vibration and wear phenomena both of the gate 100 and the pinion 110.

In one embodiment, the distance between the plane defined by the rear faces 17 of the rack 1 and the plane defined by the rear face slotted element 167 is approximately equal to 10 millimeters.

For example, the rack 1 has a weight between 394 and 395 grams, for example equal to 394.8 grams.

As stated, the actuation system 500 for moving a gate 100 is also part of the subject matter of this invention. This actuation system 500 comprises a driving member 120, a pinion 110 rotationally actuatable by the driving member 120, and the rack 1 which engages the teeth of the pinion 110.

In one embodiment, the rack 1 is configured to engage the pinion 110 with the upper toothing 12 thereof or with the lower toothing 14 thereof. In other words, the pinion 110 of the driving member 120 can engage the upper toothing 12 or the lower toothing 14 without distinction.

In a first embodiment, the rack 1 engages the teeth of the pinion 110 by means of the upper toothing 12, i.e. such that the pinion 110 is positioned above the axis X-X.

In a second embodiment, the rack 1 engages the teeth of the pinion 110 by means of the lower toothing 14, i.e. such that the pinion 110 is positioned below the axis X-X.

As stated, the gate assembly 900 is also part of the subject matter of this invention. This gate assembly comprises a gate 100 and the actuation system 500, the rack 1 of which is fixed to the gate 100.

According to one embodiment, the gate 100 mainly extends in a longitudinal direction along a gate axis Y-Y.

In one embodiment, the rack 1 is fixed to the gate 100 such that the rack axis X-X is parallel to this gate axis Y-Y.

In one embodiment, the rack 1 is fixed to the gate 100 such that the rack axis X-X is parallel to the ground.

Innovatively, the rack for motorized gates that is the subject of this invention fully achieves the intended object. Similarly, the actuation system for a gate that is the subject of this invention, comprising said rack, also fully achieves the intended object. Moreover, the gate assembly that is the subject of this invention also fully achieves the intended object.

Advantageously, on account of the geometry of the rack, the lack of steel core does not compromise the straightness of the rack, despite the length thereof.

The rack according to this invention can advantageously indiscriminately engage the teeth of a pinion by means of the upper toothing or the lower toothing, i.e. can be used indiscriminately along one of the two longitudinal sides.

The rack of this invention is advantageously extremely light and makes storing, moving and fixing said rack to the base of the gate easier.

A person skilled in the art may make several changes, adaptations and replacements of elements with other functionally equivalent elements to the embodiments of the rack, actuation system and gate assembly according to the invention in order to meet incidental needs, without departing from the scope of the following claims. Each of the features described as belonging to a possible embodiment may be obtained independently of the other described embodiments.

## Claims

1. A rack (1) for motorized gates, comprising a rack body (10) which mainly extends in a longitudinal direction along a rack axis (X-X), wherein an upper toothing (12) and a lower toothing (14) are obtained in the rack body (10), suitable to engage a pinion (110) of a driving member (120) for moving a gate (100), wherein the upper toothing (12) and the lower toothing (14) are mutually equal and are obtained symmetrically with respect to the rach axis (X-X); **characterized in that** the rack body (10) is made in one piece of polymer material only,
wherein the rack body (10) forms a vertical wall (20), wherein each toothing (12, 14) extends, in the dimension thereof which is perpendicular to the rack axis (X-X), straddling the vertical wall (20) , wherein said vertical wall (20) divides the rack body (10) into a front portion and a rear portion,
wherein the rack body (10) is substantially hollow , wherein said front portion and said rear portion are therefore a front longitudinal cavity and a rear longitudinal cavity, respectively, which extend along the rack axis (X-X), wherein the rack body (10) forms reinforcing ribs (40),
wherein each reinforcing rib (40) is connected to the vertical wall (20).

2. A rack according to claim 1, wherein each toothing (12, 14) comprises a plurality of teeth (131) separated by a plurality of depressions (132), and wherein each depression (132) of at least one set of depressions (132H) of a toothing (12,14) is connected to two respective depressions (132) of at least one set of depressions (132G) of the other toothing by means of said reinforcing ribs (40), said two depressions (132) being axially offset with respect to the depression (132) of the facing toothing to which they are connected.

3. A rack according to any one of the preceding claims, wherein a plurality of slotted fixing elements (16) interposed between the upper toothing (12) and the lower toothing (14) is obtained in the rack body (10), wherein a through slot (161), for example with vertical extension, is obtained in each of said slotted fixing elements (16) for a screw to pass for fixing the rack (1) to the base of the gate (100).

4. A rack (1) according to claim 3, wherein the upper toothing (12) and the lower toothing (14) comprise front faces (15) and rear faces (17), wherein the slotted fixing elements (16) protrude horizontally from a vertical rear plane defined by the rear faces (17) of the upper toothing (12) and the lower toothing (14).

5. An actuation system (500) for moving a gate (100), comprising a driving member (120), a pinion (110) rotationally actuatable by the driving member (120), and a rack (1) according to any one of the preceding claims, which engages the teeth of the pinion (110).

6. An actuation system (500) according to claim 5, wherein the rack (1) is configured to engage the pinion (110) with the upper toothing (12) thereof or the lower toothing (14) thereof.

7. A gate assembly (900), comprising a gate (100) and an actuation system (500) according to claim 7 or 8 for moving the gate (100), wherein the rack (1) is fixed to the gate (100).

## Patentansprüche

1. Zahnstange (1) für motorisierte Tore, umfassend einen Zahnstangenkörper (10), der sich hauptsächlich in einer Längsrichtung entlang einer Zahnstangenachse (X-X) erstreckt, wobei eine obere Verzahnung (12) und eine untere Verzahnung (14) in dem Zahnstangenkörper (10) gebildet sind, die geeignet sind, mit einem Ritzel (110) eines Antriebsglieds (120) in Eingriff zu gelangen, um ein Tor (100) zu bewegen, wobei die obere Verzahnung (12) und die untere Verzahnung (14) zueinander gleich sind und symmetrisch in Bezug auf die Zahnstangenachse (X-X) gebildet sind;
**dadurch gekennzeichnet, dass** der Zahnstangenkörper (10) einstückig lediglich aus Polymermaterial hergestellt ist,
wobei der Zahnstangenkörper (10) eine vertikale Wand (20) bildet, wobei sich jede Verzahnung (12, 14) in der Abmessung davon, die senkrecht zu der Zahnstangenachse (X-X) ist, beidseitig der vertikalen Wand (20) bzw. diese überspannend erstreckt, wobei die vertikale Wand (20) den Zahnstangenkörper (10) in einen vorderen Abschnitt und einen hinteren Abschnitt unterteilt, wobei der Zahnstangenkörper (10) im Wesentlichen hohl ist, wobei der vordere Abschnitt und der hintere Abschnitt daher ein vorderer Längshohlraum bzw. ein hinterer Längshohlraum sind, die sich entlang der Zahnstangenachse (X-X) erstrecken, wobei der Zahnstangenkörper (10) Verstärkungsrippen (40) bildet, wobei jede Verstärkungsrippe (40) mit der vertikalen Wand (20) verbunden ist.

2. Zahnstange nach Anspruch 1, wobei jede Verzahnung (12, 14) eine Mehrzahl von Zähnen (131) umfasst, die durch eine Mehrzahl von Vertiefungen (132) getrennt sind, und wobei jede Vertiefung (132) mindestens eines Satzes von Vertiefungen (132H) einer Verzahnung (12, 14) mit zwei jeweiligen Vertiefungen (132) mindestens eines Satzes von Vertiefungen (132G) der anderen Verzahnung mittels der Verstärkungsrippen (40) verbunden ist, wobei die beiden Vertiefungen (132) in Bezug auf die Vertiefung (132) der zugewandten Verzahnung, mit der sie verbunden sind, axial versetzt sind.

3. Zahnstange nach einem der vorhergehenden Ansprüche, wobei in dem Zahnstangenkörper (10) eine Mehrzahl von geschlitzten Befestigungselementen (16) gebildet ist, die zwischen der oberen Verzahnung (12) und der unteren Verzahnung (14) angeordnet sind, wobei in jedem der geschlitzten Befestigungselemente (16) ein durchgehender Schlitz (161), zum Beispiel mit vertikaler Ausdehnung, für den Durchgang einer Schraube zur Befestigung der Zahnstange (1) an der Basis des Tors (100) gebildet ist.

4. Zahnstange (1) nach Anspruch 3, wobei die obere Verzahnung (12) und die untere Verzahnung (14) vordere Flächen (15) und hintere Flächen (17) umfassen, wobei die geschlitzten Befestigungselemente (16) horizontal von einer vertikalen hinteren Ebene vorstehen, die durch die hinteren Flächen (17) der oberen Verzahnung (12) und der unteren Verzahnung (14) definiert ist.

5. Betätigungssystem (500) zum Bewegen eines Tors (100), umfassend ein Antriebsglied (120), ein durch das Antriebsglied (120) drehbar betätigbares Ritzel (110) und eine Zahnstange (1) nach einem der vorhergehenden Ansprüche, die in die Zähne des Ritzels (110) eingreift.

6. Betätigungssystem (500) nach Anspruch 5, wobei die Zahnstange (1) konfiguriert ist, mit der oberen Verzahnung (12) davon oder der unteren Verzahnung (14) davon in das Ritzel (110) einzugreifen.

7. Toranordnung (900), umfassend ein Tor (100) und ein Betätigungssystem (500) nach Anspruch 7 oder 8 zum Bewegen des Tors (100), wobei die Zahnstange (1) an dem Tor (100) befestigt ist.

## Revendications

1. Crémaillère (1) pour portails motorisés, comprenant un corps de crémaillère (10) qui s'étend principalement dans une direction longitudinale le long d'un axe de crémaillère (X-X), dans laquelle une denture supérieure (12) et une denture inférieure (14) sont obtenues dans le corps de crémaillère (10), adaptées pour venir en prise avec un pignon (110) d'un élément d'entraînement (120) pour déplacer un portail (100), dans lequel la denture supérieure (12) et la denture inférieure (14) sont mutuellement égales et sont obtenues symétriquement par rapport à l'axe de crémaillère (X-X) ; **caractérisée en ce que** le corps de crémaillère (10) est fait en une seule pièce uniquement en matériau polymère, dans laquelle le corps de crémaillère (10) forme une paroi verticale (20), dans laquelle chaque denture (12, 14) s'étend, dans la dimension de celle-ci qui est perpendiculaire à l'axe de crémaillère (X-X), chevauchant la paroi verticale (20), dans laquelle ladite paroi verticale (20) divise le corps de crémaillère (10) en une partie avant et une partie arrière, dans laquelle le corps de crémaillère (10) est sensiblement creux, dans laquelle ladite partie avant et ladite partie arrière sont par conséquent une cavité longitudinale avant et une cavité longitudinale arrière, respectivement, qui s'étendent le long de l'axe de crémaillère (X-X), dans laquelle le corps de crémaillère (10) forme des nervures de renforcement (40), dans laquelle chaque nervure de renforcement (40) est reliée à la paroi verticale (20).

2. Crémaillère selon la revendication 1, dans laquelle chaque denture (12, 14) comprend une pluralité de dents (131) séparées par une pluralité de renfoncements (132) et dans laquelle chaque renfoncement (132) d'au moins un ensemble de renfoncements (132H) d'une denture (12, 14) est relié à deux renfoncements (132) respectifs d'au moins un ensemble de renfoncements (132G) de l'autre denture au moyen desdites nervures de renforcement (40), lesdits deux renfoncements (132) étant axialement décalés par rapport au renfoncement (132) de la denture opposée à laquelle ils sont reliés.

3. Crémaillère selon l'une quelconque des revendications précédentes, dans laquelle une pluralité d'éléments de fixation rainurés (16) interposés entre la denture supérieure (12) et la denture inférieure (14) est obtenue dans le corps de crémaillère (10), dans laquelle une rainure traversante (161), par exemple avec une extension verticale, est obtenue dans chacun desdits éléments de fixation rainurés (16) pour qu'une vis passe pour fixer la crémaillère (1) à la base du portail (100).

4. Crémaillère (1) selon la revendication 3, dans laquelle la denture supérieure (12) et la denture inférieure (14) comprennent des faces avant (15) et des faces arrière (17), dans laquelle les éléments de fixation rainurés (16) font saillie horizontalement à partir d'un plan arrière vertical défini par les faces arrière (17) de la denture supérieure (12) et de la denture inférieure (14).

5. Système d'actionnement (500) pour déplacer un portail (100), comprenant un élément d'entraînement (120), un pignon (110) actionnable de manière rotative par l'élément d'entraînement (120), et une crémaillère (1) selon l'une quelconque des revendications précédentes, qui entre en prise avec les dents du pignon (110).

6. Système d'actionnement (500) selon la revendication 5, dans lequel la crémaillère (1) est configurée pour venir en prise avec le pignon (110) avec la denture supérieure (12) de celle-ci ou la denture inférieure (14) de celle-ci.

7. Ensemble portail (900), comprenant un portail (100) et un système d'actionnement (500) selon la revendication 7 ou 8 pour déplacer le portail (100), dans lequel la crémaillère (1) est fixée au portail (100).
